Europäisches Patentamt

European Patent Office

Office européen des brevets

(19)

(11) Veröffentlichungsnummer: **0 002 704**
**B1**

(12) **EUROPÄISCHE PATENTSCHRIFT**

(45) Veröffentlichungstag der Patentschrift:
05.05.82

(21) Anmeldenummer: 78101609.2

(22) Anmeldetag: 08.12.78

(51) Int. Cl.³: **E 02 F 7/04,** C 02 F 11/12,
B 63 B 35/32

(54) Verfahren zur Entfernung von Schlamm aus Gewässern.

(30) Priorität: 10.12.77 DE 2755125

(43) Veröffentlichungstag der Anmeldung:
11.07.79 Patentblatt 79/14

(45) Bekanntmachung des Hinweises auf die Patenterteilung:
05.05.82 Patentblatt 82/18

(84) Benannte Vertragsstaaten:
BE DE FR GB IT NL

(56) Entgegenhaltungen:
DE-A-1 918 332
DE-A-1 955 944
DE-C-884 778
DE-C-1 208 140
US-A-3 544 456

(73) Patentinhaber: CASSELLA Aktiengesellschaft, Hanauer Landstrasse 526, D-6000 Frankfurt am Main 61 (DE)

(72) Erfinder: Gruber, Günter, Dr., Birsteinerstrasse 27, D-6000 Frankfurt am Main (DE)
Erfinder: Slebos, Gerhard, Wellingbüttler Weg 56 c, D-2000 Hamburg 65 (DE)

(74) Vertreter: Urbach, Hans-Georg, Dr. et al, Hanauer Landstrasse 526, D-6000 Frankfurt am Main 61 (DE)

ACTORUM AG.

# Verfahren zur Entfernung von Schlamm aus Gewässern

Die Erfindung betrifft ein Verfahren zur Entfernung fein- und feinstteiliger Schlämme aller Art, beispielsweise Schlick aus Gewässern, wie z.B. aus Flüssen, Seen, Hafenbecken usw. Das Problem der Reinhaltung derartiger Gewässer ist, nachdem ihr Verschmutzungsgrad mancherorts nicht mehr zu vertretende Höhen erreicht hat, jedermann bekannt. Mit dem Verschmutzungsgrad der Gewässer nehmen auch die feinen und feinsten, zunächst im Wasser schwebenden Feststoffteilchen zu, die im Laufe von Wochen und Monaten ein ständiges Ansteigen des Schlammpegels in den Gewässern verursachen. Fauna und Flora vieler, darunter auch in Naherholungsgebieten gelegener Seen sind bereits in ihrer Existenz durch Totalverschlammung aufs Ärgste bedroht. In Flussmündungen, die zu Brackwassergebieten gehören, wo die Verschlammung der Gewässer noch dadurch verstärkt wird, dass die nur im Süsswasser lebenden Mikroorganismen beim Zusammentreffen mit Meerwasser durch den zu hohen Salzgehalt zugrunde gehen und absinken, wird durch den sich vermehrenden Schlamm oder Schlick stellenweise sogar die Schiffahrt behindert. Man versucht auf verschiedene Weisen, der geschilderten Verschlammung Herr zu werden. In besonders betroffenen Hafenanlagen, beispielsweise an Fährenan- und ablegeplätzen, werden Unterwasserpflüge, auch Unterwasserharken oder -eggen genannt, bei ablaufendem Wasser (Ebbe) durch Schlepper ununterbrochen durch die Schlammassen gezogen, in der Hoffnung, dass der unter Wasser aufgewirbelte Schlamm mit dem abfliessenden Wasser in Richtung Meer getragen wird. Die Wirkung dieser Massnahme ist gering, da die Flut den Schlamm auch wieder zurückbringt. Wesentlich effektiver arbeiten hierbei die Verfahren der Nassbaggerei mittels Greifbagger oder Eimerkettenbagger. Greifbagger können nur zur Beseitigung kleinerer Mengen Schlamm eingesetzt werden. Saugbagger und Eimerkettenbagger müssen für ihren Einsatz fest verankert werden und stellen in Hafenanlagen und Wasserstrassen für die Dauer ihres Einsatzes ein Verkehrshindernis dar. Der schwimmende Saugbagger fördert in der Regel das gebaggerte Gut durch eine Schwimmleitung und eine daran sich anschliessende Rohrleitung auf dem Festland in ein künstlich angelegtes Spülfeld (Polder). Da Schwimmleitungen an Orten wetterbedingter schwerer Wellengänge oder auch starker Gezeitenströmungen nicht beliebig lang gelegt werden können, ist die Methode nicht überall anwendbar. Die Kombination von Saugbagger und Lastkähnen, sogenannter Schuten, in die das gebaggerte Gut gefüllt und mit Schleppern zur Abladestelle transportiert wird, wäre eine unwirtschaftliche Problemlösung, da beim Saugbaggern von Schlämmen die aus verfahrenstechnischen Gründen stets mitgeförderten grossen Wassermengen im schwer absetzbaren Schlamm verbleiben und damit die Schutentransportfrequenz beträchtlich erhöhen. Auch ist an der Abladestelle ein Schutenspüler (Pumpenschiff) erforderlich. Der Aufwand von Schuten, Schleppern und Schutenspülern ist sinnvoller kombiniert mit einem Eimerkettenbagger, der den Schlamm kontinuierlich von der Gewässersohle mit Hilfe seiner an einer endlosen Kette hängenden Eimer in praktisch Originalkonzentration hochholt und in die neben dem Baggerschiff liegenden Schuten entleert. Beim Arbeiten mit einem Eimerkettenbagger ist allerdings eine Verschmutzung des Oberflächenwassers nicht zu vermeiden. Gegenüber einem normalen Saugbagger ist ein Eimerkettenbagger je nach Untergrundbeschaffenheit meist in der Lage, eine gewünschte Gewässerprofiländerung nach Plan zu schneiden, d.h. eine Vertiefung der Sohle oder eine Verbreiterung des Gewässers herbeizuführen. Da in den meisten Fällen nur eine Entschlammung des Gewässers und keine besondere Profiländerung verlangt wird, ist der Einsatz eines Eimerkettenbaggers nur zur Entschlammung zu umständlich und zu aufwendig.

Als Hopper oder Hoppersauger bezeichnet man ein Schiff, das alle für einen Nassbaggerbetrieb erforderlichen Funktionen (Saugbagger, Schute, Schlepper und Schutenspüler) in sich vereinigt und zur Entfernung von Sand aus Gewässern viel benützt wird. Ein Hopper benötigt zum Baggern keine Verankerung und kann sich daher jederzeit durch eigenen Schiffsschraubenantrieb vom Baggerplatz entfernen, so dass er für den Schitfsverkehr kein Hindernis bedeutet. Eine fast das ganze Schiff einnehmende Ladewanne (Hopperwanne) dient zur Aufnahme des hochgeholten Sandes. Der Sand wird im Gemisch mit Wasser kontinuierlich über einen an der Aussenseite des Hoppersaugers angebrachten, vertikal beweglichen Saugrüssel angesaugt und in ein sich anschliessendes Rohrsystem geleitet, das in zwei back- und steuerbordlängsseitig über der Hopperwanne verlaufenden, mit zahlreichen verschliessbaren Klappen versehenen Hopperwannen-Einlaufrohren endet. Das Wasser-Sand-Gemisch fliesst aus den Einlaufrohren über die gesamte Länge in die Hopperwanne ein, in der sich der spezifisch schwere Sand sofort absetzt und das abgetrennte Wasser kontinuierlich über direkt unter der Deckoberkante angebrachte, vertikal verstellbare Überlaufluken in der Bordwand in das Gewässer abfliesst. Auf diese Weise wird kontinuierlich Wasser-Sand-Gemisch vom Gewässerboden hochgesaugt und in die Hopperwanne geleitet, bis sie mit Sand gefüllt ist.

Nach Füllung der Hopperwanne und Hochbringen und Verstauen des Saugrüssels fährt der Hopper mit eigener Kraft zu einer gegebenenfalls kilometerweit entfernten Abladestelle und entlädt sich dort entweder über eine im Hopperboden befindliche Entladeklappe oder mit eigener Pumpe im Spülverfahren über Bodenventile (Schieber). Der Hoppersauger ist aufgrund seiner Arbeitsweise ein wirtschaftlich arbeitendes Baggergerät. Bei der Sandnassbaggerei kann die Hopperwanne mit einem Inhalt von z.B. 500 bis 5000 m³ binnen ¹/₃ bis 3 Stunden mühelos im Überlaufverfahren mit Sand gefüllt werden. Versuche, Hopper zur Entfernung von Schlamm aus Gewässern einzusetzen, sind fehlgeschlagen, da es selbst bei tagelangem Baggern nicht gelingt, die Hopperwanne mit einer rentablen Menge an Feststoff zu füllen. Die in die Hopperwanne eingepumpten Schlamm-Wasser-Suspensionen zeigen nämlich aufgrund der geringen Unterschiede in der Dichte zwischen Feststoff und Wasser keine Neigung zum Absetzen, sondern werden bei dem für einen Hopper charakteristischen Überlaufverfahren mit der gleichen Feststoffkonzentration aus den Überlaufluken über Bord gespült, wie sie in die Hopperwanne einfliessen. Die Feststoffkonzentration in der hochgepumpten Schlamm-Wasser-Suspension ist viel zu gering, um einen wirtschaftlichen Betrieb zu ermöglichen.

Die US-A-3 544 456 betrifft ein Baggerverfahren, bei dem eine Suspension von festem, teilchenförmigem Material (solid particulate matter) in einen Lastkahn eingebracht wird, wobei die Verbesserung darin besteht, dass die Absetzgeschwindigkeit des festen feinteiligen Materials durch Zusatz eines wasserlöslichen Polyelektrolyten erhöht wird. Nach Anspruch 2 wird als festes, teilchenförmiges Material «silt» genannt. Webster's Third New International Dictionary definiert «silt» an erster Stelle wie folgt: «unconsolidated or loose sedimentary material whose constituent rock particles are finer than grains of sand and larger than clay particles; specif: material consisting of mineral soil particles ranging in diameter from 0.02 to 0.002 millimeters» (lockeres oder loses sedimentäres Material, bestehend aus Gesteinsteilchen, die feiner als Sand und grösser als Tonteilchen sind; insbesondere: Material aus mineralischen Bodenteilchen mit einem Durchmesser von 0,02 bis 0,002 mm).

Nach den Angaben in der Tabelle I der US-A-3 544 456 waren bei den durchgeführten Praxisversuchen ohne Polymerzusatz Pumpzeiten von 20 bzw. 21 Minuten für die Beladung des Schiffes ausreichend. Wie aus diesen kurzen Pumpzeiten hervorgeht, wird der Laderaum im Überlaufverfahren gefüllt, d.h. während des Befüllungsvorgangs findet bereits ein Absetzen der Feststoffe und die Ausbildung einer Klarwasserschicht statt. Aus diesen und den anderen obenstehenden Angaben folgt, dass bei dem Verfahren der US-A-3 544 456 Suspensionen verarbeitet werden, die anorganische, scharf begrenzte feste Teilchen enthalten, die trotz ihrer Kleinheit noch eine deutliche Tendenz zum Absetzen besitzen. Bei diesem Verfahren werden daher keine Schlamm- oder Schlicksuspensionen verarbeitet, deren Absetzverhalten sich grundlegend von dem Absetzverhalten von Sand- bzw. Siltsuspensionen unterscheidet. Während sich Sand- bzw. Siltsuspensionen, wie sie bei dem Verfahren der US-A-3 544 456 verwendet werden, relativ rasch absetzen (z.B. 20 Minuten, Tabelle I der US-A-3 544 456), zeigen Schlamm- bzw. Schlicksuspensionen aus Gewässerablagerungen in der Regel kein ausgeprägtes Absetzverhalten mehr.

Das Verfahren der DE-A-1 955 944 betrifft das Beladen eines Raumes eines Saugbaggerschiffes mit einer Suspension von Sand und Wasser, wobei in einem ersten Schritt Sand-Wasser-Suspensionen in den Raum gepumpt werden, bis das Saugbaggerschiff im wesentlichen auf seine höchst zulässige Tragfähigkeit beladen ist, und in einem drauffolgenden zweiten Schritt zusäztliche Suspension in den Raum gepumpt wird, wobei gleichzeitig durch Absenken von Abfliessmitteln in Abhängigkeit von dem Gewicht der Ladung des Raums Wasser abfliesst, so dass das Saugbaggerschiff im wesentlichen auf seiner höchstzulässigen Tragfähigkeit beladen bleibt. Dieses Verfahren setzt ein ausgeprägtes Absetzverhalten der geförderten Sand-Wasser-Suspension voraus und ist auf Schlamm- bzw. Schlicksuspensionen nicht übertragbar.

Bei dem Verfahren der DE-A-1 918 332 wird dem zu baggernden oder gebaggerten Gut ein die Sedimentationsgeschwindigkeit des Feststoffs förderndes Mittel zugegeben, wobei das gebaggerte Gut in einer dünnen Schicht ausgebreitet oder geschleudert wird. Durch die Ausbreitung in dünner Schicht bzw. Schleuderung wird dieses bekannte Verfahren für den praktischen Einsatz in hohem Masse kompliziert.

Aufgabe der vorliegenden Erfindung ist es daher, eine einfache und wirtschaftliche Methode zur Entfernung von Schlamm aus Gewässern anzugeben, die auch auf solche Schlämme anwendbar ist, deren wässrige Suspensionen kein ausgeprägtes Absetzverhalten mehr zeigen.

Das erfindungsgemässe Verfahren zur Entfernung von Schlamm aus Gewässern ist dadurch gekennzeichnet, dass man den Schlamm hochsaugt und die hochgesaugte Schlamm-Wasser-Suspension zusammen mit einem Flockungsmittel in einen schwimmenden Behälter füllt, das Füllen unterbricht, sobald der Behälter voll ist, und nach dem Absitzen des Schlamms die überstehende Wasserschicht entfernt und das Füllen unter Flockungsmittelzusatz, Absitzenlassen, Entfernen der überstehenden Wasserschicht solange wiederholt, bis der Behälter mit Schlamm gefüllt ist.

Damit sich der Schlamm aus der Schlamm-Wasser-Suspension unter Ausbildung einer überstehenden Klarwasserschicht absetzt, ist die Zugabe eines Flockungsmittels erforderlich. Flokkungsmittel sind bekannt. Es sind meist hochpolymere Produkte, wie z.B. Kautschukphosphoniumsalze, Stärkeprodukte, Proteine, Polyacrylate, Knochenleim, Polyäthylenoxide, Polyacrylamide, Polyäthylenimine, usw.

Die Flockungsmittel werden eingeteilt in nichtionische, anionische und kationische Flockungsmittel. Um für den jeweils vorliegenden Schlamm das geeignetste Flockungsmittel auswählen zu können, werden Sedimentationsversuche im Labor mit einer Probe hochgesaugter Schlamm-Wasser-Suspension durchgeführt und dabei die für eine Totalflockung optimale Menge Flockungsmittel ermittelt. Gute Ergebnisse zeigen in der Praxis Flockungsmittel auf der Basis von z.B. Polyacrylamid, teilverseiftem Polyacrylamid, nichtionischem Polyäthylenoxid, kationischem Polyäthylenamin, kationischem Polyäthylenimin, kationischem Poly-dimethylamino-äthylmethacrylat und/oder Poly-dimethylaminoäthylacrylat, kationischen Copolymerisaten von Dimethylaminoäthylmethacrylat und -acrylat und/oder Acrylamid.

Das Flockungsmittel wird normalerweise in Form einer wässrigen Lösung direkt der hochge-pumpten Schlamm-Wasser-Suspension, zweck-mässigerweise sofort nach der Pumpe, in der durch Vorversuche ermittelten optimalen Menge zugesetzt. Die wässrige Lösung des Flockungsmittels kann eine Konzentration von 0,001 Gew.-% und höher, insbesondere von 0,01 bis 0,5 Gew.-%, besitzen. Sofern wässrige Lösungen mit einer Konzentration grösser als 0,5 Gew.-% noch dosierbar sind, können auch konzentriertere Lösungen verwendet werden. Es kann zweckmässig sein, die Konzentration des Schlamms in der Schlamm-Wasser-Suspension während des Hochpumpens laufend, z.B. radiometrisch, zu messen und entsprechend der gemessenen Schlammkonzentration das Flockungsmittel zuzudosieren. Normalerweise werden pro m³ hochgepumpter Schlamm-Wasser-Suspension 10 bis 100 ppm Flockungsmittel (bezogen auf 100%iges Flockungsmittel) zugesetzt. Am Boden eines Gewäs-sers abgesetzter Schlamm oder Schlick enthält in der Regel 40 bis 50 Gew.-% Feststoffe. Beim Hochpumpen wird er normalerweise im Verhältnis 1 : (1 bis 20) mit Wasser verdünnt.

In manchen günstig gelagerten Fällen findet schon während des Füllens des schwimmenden Behälters mit der mit Flockungsmittel versetzten Schlamm-Wasser-Suspension eine gewisse Trennung zwischen Schlamm und Wasser statt, so dass zuerst ein Klarwasserspiegel die Niveaubegrenzung im schwimmenden Behälter erreicht. In solchen Fällen ist es zweckmässig, die überstehende Klarwasserschicht noch während des Füllvorgangs zu entfernen, was am einfachsten durch Überlaufenlassen des Klarwassers über die Behälterwand oder über in der Behälterwand an-gebrachte Überlaufluken vorgenommen werden kann. Aber auch in günstig gelagerten Fällen kann auf eine derartige Weise nur wenige Minuten lang eine Klarwasserschicht entfernt werden, dann erreicht die Schlamm-Wasser-Suspension die Niveaubegrenzung des Behälters. Der Füllvorgang wird nun unterbrochen. Nach dem Absitzen des Schlamms wird die überstehende Klarwasserschicht entfernt und das Füllen. Absitzenlassen, und Entfernen der Klarwasserschicht solange wiederholt, bis eine rentable Menge Schlamm im Behälter angesammmelt ist, worauf der Behälter zur Abladestelle des Schlammes transportiert und dort entleert wird.

Für das Hochsaugen des am Gewässerbodens abgelagerten Schlamms in Form einer Schlamm-Wasser-Suspension und ihr Entleeren in den schwimmenden Behälter werden bekannte Saugvorrichtungen verwendet. Die Entfernung der Klarwasserschicht über dem im schwimmenden Behälter abgesetzten Schlamm kann auf verschiedene Weise erfolgen. Beispielsweise kann in der Behälterwand ein vertikal verstellbarer Schieber angeordnet sein, der in seiner höchsten Stellung eine Ausflussöffnung, beispielsweise eine Aufflussluke, verschliesst. Nach der Trennung der Suspension in eine Schlammschicht und in eine Klarwasserschicht wird die Ausflussöffnung, z.B. die Ausflussluke, allmählich geöffnet, so dass die Klarwasserschicht in das Gewässer abfliessen kann. Man kann auch in dem schwimmenden Behälter eine getrennte Auffangkammer vorsehen, in die das überstehende Klarwasser durch eine verschliessbare Öffnung abfliessen kann und aus der das Klarwasser beispielsweise durch eine Pumpe entfernt wird.

Weiterhin kann die Klarwasserschicht durch ein Ablaufrohr oder einen Ablaufschlauch entfernt werden, durch die das Wasser im freien Lauf in das Gewässer fliesst oder mittels einer Pumpe angesaugt wird.

Es können auch verschiedene Möglichkeiten für die Entfernung der Klarwasserschicht miteinander kombiniert werden. In jedem Fall sollte die Entfernung der Klarwasserschicht so durchgeführt werden, dass in der Schlammschicht möglichst wenig Aufwirbelungen erfolgen. Dies kann z.B. dadurch erreicht werden, dass der Überlauf, Einlauf oder das Absaugen des Wassers stets kurz unter der Klarwasseroberfläche erfolgt. Die Über-laufkanten, Einlauf- oder Absaugöffnungen müs-sen zu diesem Zweck dem absinkenden Klarwasserspiegel angepasst, d.h. laufend mit dem absinkenden Klarwasserspiegel abgesenkt werden. Es ist sinnvoll, Einlauföffnungen von Abflussrohren, Absaugschläuchen od.dgl. so anzubringen, dass das Klarwasser von oben nach unten in die Abflussrohre, Absaugschläuche od.dgl. zufliessen kann. Das in die Einlauföffnungen zufliessende Klarwasser stammt dadurch hauptsächlich von der Wasseroberfläche. Durch diese Massnahme wird verhindert, dass durch Sogwirkungen, wie sie bei ungünstig ausgebildeten bzw. angeordneten Einlauföffnungen auftreten können, Teile des gewonnenen Schlamms bei Abziehen des Klarwassers mitgeführt werden.

Ausserdem ist es zweckdienlich, die Einlauföffnung eines Ablauf- oder Absaugrohres trichterförmig auszuführen, da dadurch die Überlaufgeschwindigkeit des von der Oberfläche zulaufenden Klarwassers reduziert wird. Vorteilhaft ist es auch, Überlaufkanten und Einlauföffnungen für das Klarwasser zackenförmig auszubilden.

Das Einfüllen der hochgepumpten Schlamm-Wasser-Suspension zusammen mit dem Flokkungsmittel in den Behälter erfolgt zweckmässigerweise so, dass auch beim Füllvorgang möglichst wenig Turbulenzen entstehen. Bei länglichen Behältern, wie sie z.B. bei Booten und Schiffen meist vorhanden sind, ist es zweckmässig, die Schlamm-Wasser Suspension zusammen mit dem Flockungsmittel nur an einem Längsende einzufüllen. Dadurch wird erreicht, dass die stärksten Turbulenzen während des Einfüllvorganges nur an einem Längsende auftreten, und ein Absetzen des Schlammes bereits während des Füllvorgangs eingeleitet wird. Die Vorrichtung für die Entfernung der Klarwasserschicht wird zweckmässigerweise am anderen Längsende des Behälters angeordnet. Vorteilhafterweise wird auch während des Füllvorganges die Schlamm-Wasser-Suspension unterhalb des vorhandenen Flüssigkeitsspiegels in den Behälter eingeleitet. Dadurch wird ein Aufschlagen der Suspension auf die Flüssigkeitsoberfläche im Behälter mit der dadurch verbundenen Zerschlagung bereits gebildeter Schlammflocken und ausserdem eine störende Schlammbildung verhindert.

Weiterhin ist es zweckmässig, das Einfüllen der Schlamm-Wasser-Suspension an einem Ende des länglichen Behälters vorzunehmen und diesen Teil im Bereich höherer Flüssigkeitsstände gegenüber dem übrigen Teil des Behälters abzutrennen. Dadurch wird bei höheren Flüssigkeitsständen eine Beruhigungszone gebildet und die Sedimentationsgeschwindigkeit erhöht. Vor dem nachfolgenden Abziehen der Klarwasserschicht muss jedoch die Abtrennung zwischen dem Einfüllbereich und dem übrigen Behälter beseitigt werden. Normalerweise ist bereits nach wenigen, z.B. 2–4 Zyklen des erfindungsgemässen Verfahrens, die innerhalb von wenigen, beispielsweise 1 bis 3 Stunden durchgeführt werden können, ein Behälter von z.B. 500 bis 5000 m³ Inhalt mit einer so grossen hochkonzentrierten Schlamm-Menge gefüllt, dass ein wirtschaftlicher Abtransport möglich ist. An der Entladestelle wird der Schlamm aus dem Behälter entfernt, z.B. über Klappen am Boden des Behälters abgelassen. Der Schlamm im Behälter kann auch an der Entnahmestelle mit Wasser auf Pumpfähigkeit verdünnt und abgepumpt werden.

Als schwimmende Behälter für die Durchführung des erfindungsgemässen Verfahrens kommen z.B. geeignete Boote und Schiffe, wie z.B. Schuten, vorzugsweise aber Hopper oder Hoppersauger in Betracht. Bei Verwendung eines Hoppersaugers werden die während des Nassbaggerns in die Hopperwanne einlaufenden fein- und feinstteiligen Schlamm-Wasser-Suspensionen aller Art mit einem Flockungsmittel versetzt und die Hopperwanne bis kurz vor Überlauf gefüllt. Dann wird das Baggern für kurze Zeit unterbrochen. Die sich über der Schlammschicht ausbildende Klarwasserschicht wird mit Hilfe einer geeigneten Vorrichtung abgezogen und dann das Baggern unter Zusatz eines Flockungsmittels zur einlaufenden Schlamm-Wasser-Suspension wieder aufgenommen, bis die Hopperwanne erneut bis kurz vor Überlauf gefüllt ist. Die sich erneut ausbildende Klarwasserschicht wird abgezogen und das Füllen unter Flockungsmittelzusatz, Absitzenlassen, Entfernen der über dem Feststoff liegenden Klarwasserschicht wird solange wiederholt, bis die Hopperwanne mit einer rentablen Menge ausgeflockten Schlamms gefüllt ist.

Zur Durchführung des erfindunsgemässen Verfahrens muss ein üblicher Hoppersauger praktisch nur noch mit einer Vorrichtung für die Entfernung des Klarwassers versehen werden, wozu in der Regel nur ein kleiner Umbau vorzunehmen ist.

Angesichts vieler erfolgloser Bemühungen mit Hoppern, Schlämme aus Gewässern auf eine wirtschaftliche Art zu entfernen, muss das erfindungsgemässe Verfahren als überraschend bezeichnet werden. Es war auch nicht zu erwarten, dass durch die erfindungsgemässe Arbeitsweise in relativ kurzer Zeit das weitgehende Anfüllen des Behälters mit konzentriertem Schlamm möglich sein würde, zumal befürchtet werden musste, dass durch die für eine rasche Abtrennung des Schlammes ungünstigen Ausgestaltungen der Hopperwanne und die durch den Wellengang hervorgerufenen Bewegungen des Schiffes keine vernünftigen Absetzgeschwindigkeiten bzw. keine hohen Schlammkonzentrationen zu erzielen sein würden.

An Hand der beiliegenden Figuren wird die Erfindung weiter erläutert. Die Figuren zeigen in beispielsweiser und schematischer Darstellung einen für die Durchführung des erfindungsgemässen Verfahrens geeigneten Hoppersauger.

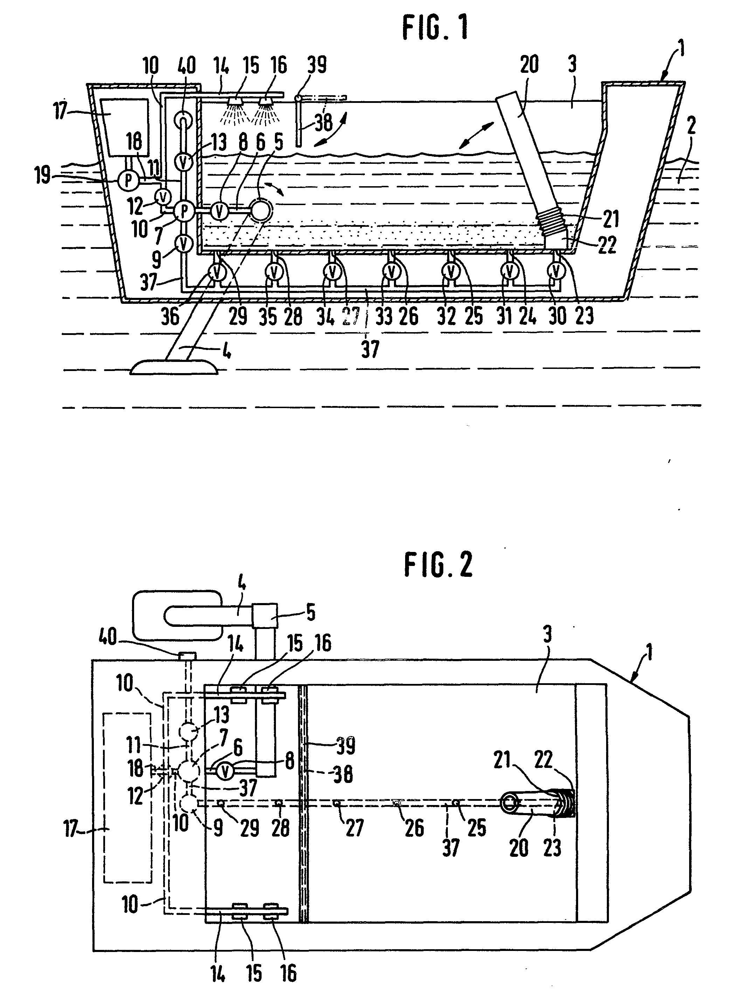

Fig. 1 zeigt in beispielsweiser und schematischer Darstellung einen Hoppersauger in der Seitenansicht, wobei die Schiffswand zum Teil aufgeschnitten dargestellt ist. Fig. 2 zeigt den Hopper der Fig. 1 in der Daraufsicht. In den Figuren sind nur diejenigen Vorrichtungen angegeben, die für die Durchführung des erfindungsgemässen Verfahrens von Wichtigkeit sind. Die Einrichtungen für die Fortbewegung des Schiffes, für die Navigation und die Unterbringung der Mannschaft usw. sind in den Figuren nicht dargestellt.

Der Hoppersauger ist mit 1 bezeichnet, der in dem Gewässer 2 schwimmt. Die eigentliche Hopperwanne ist mit 3 beziffert. Der vertikal bewegliche Saugrüssel 4 ist mittels des Gelenkes 5 seitlich am Schiff befestigt. Die Pumpe für das Ansaugen der Schlamm-Wasser-Suspension ist mit 7 beziffert. In die Saugseite der Pumpe 7 münden die beiden Leitungen 6 und 37, in denen die Ventile 8 und 9 angeordnet sind. Von der Druckseite der Pumpe 7 führen die beiden Leitungen 10 und 11 weg, in denen die Ventile 12 und 13 angeordnet sind. Die Pumpe 7 saugt über den Saugrüssel 4 und die an ihn anschliessende Leitung 6 bei geöffnetem Ventil 8 und geschlossenen Ventilen 9 und 13 eine Schlamm-Wasser-Suspension an, die über das geöffnete Ventil 12 in die Leitung 10 und anschliessend in die beiden Auslaufrohre 14 gepumpt wird. Die beiden Auslaufrohre 14 sind zu beiden Seiten der Hopperwanne 3 angebracht. Die Auslaufrohre 14 besitzen Auslauföffnungen 15 und 16, durch welche die Schlamm-Wasser-Suspension in die Hopperwanne 3 gepumpt wird. Die Auslaufrohre 14 mit ihren Auslauföffnungen 15 und 16 sind so angeordnet, dass die Schlamm-Wasser-Suspension nur am heckseitigen Ende in die Hopperwanne einfliesst. Aus dem Vorratsbehälter 17 für die wässrige Lösung des Flockungsmittels wird über die Leitung 18 durch die Dosierpumpe 19 Flockungsmittellösung der hochgepumpten Schlamm-Wasser-Suspension hinter der Pumpe 7 zudosiert. Dadurch wird eine einwandfreie Vermischung der Schlamm-Wasser-Suspension mit dem Flockungsmittel bis zum Austritt des Gemisches aus den Auslauföffnungen 15 und 16 und eine weitgehende Ausflockung des Schlamms erreicht. Im vorderen, d.h. im bugseitigen Teil der Hopperwanne 3 ist ein anheb- und senkbares Ablaufrohr 20 angebracht. Das Ablaufrohr 20 ist über eine biegbare, nicht zusammendrückbare Gummimanschette 21 mit Hilfe geeigneter Flanschstücke auf dem Kasten 22 befestigt, der die im Boden der Hopperwanne 3 befindliche Ablauföffnung 23 abdeckt. Die Vorrichtung zum Heben und Senken des Ablaufrohres 20 ist in den Figuren nicht dargestellt. Für das Heben und Senken des Ablaufrohres 20 kann beispielsweise ein geeignet angebrachter Flaschenzug verwendet werden. In der Hopperwanne sind weitere Ablauföffnungen 24 ibs 29 angeordnet, die durch die Ventile 30 bis 36 getrennt geöffnet und geschlossen werden können und welche in die gemeinsame Leitung 37 münden. Im hinteren, heckseitigen Teil der Hopperwanne 3 ist eine über die gesamte Breite der Hopperwanne sich erstreckende Platte 38 angeordnet, welche um die waagerechte Achse 39 drehbar gelagert ist. Die Platte 38 ragt in ihrer senkrechten Anordnung vom höchstmöglichen Befüllungsstand der Hopperwanne etwa 70 bis 150 cm nach unten und schafft dadurch im hinteren, heckseitigen Teil der Hopperwanne eine Beruhigungszone.

Zum Befüllen des Hoppers wird das Ablaufrohr 20 über den maximalen Befüllungsstand der Hopperwanne hochgezogen und die Ventile 9, 13, 30 bis 36 geschlossen und die Platte 38 in die senkrecht nach unten weisende Stellung gebracht. Dann wird über den Saugrüssel 4, die Leitung 6 bei geöffnetem Ventil 8 von der Pumpe 7 Schlamm-Wasser-Suspension angesaugt und gleichzeitig nach der Pumpe 7 Flockungsmittellösung über die Leitung 18 zudosiert. Die mit Flokkungsmittel versehene Schlamm-Wasser-Suspension wird über die Leitung 10 in die beiden Auslaufrohre 14 gefördert und über die Auslauföffnungen 15 und 16 in den hinteren Teil der Hopperwanne gepumpt. Der Füllvorgang wird abgebrochen, wenn der maximal mögliche Flüssigkeitsstand in der Hopperwanne erreicht ist. Sobald sich der geflockte Schlamm abgesetzt hat, was in der Regel nach 10 bis 25 Minuten der Fall ist, wird die Platte 38 in ihre waagerechte, strichpunktiert eingezeichnete Lage hochgeklappt und das Ablaufrohr 20 unter den Spiegel der Klarwasserschicht abgesenkt. Gleichzeitig wird das Ventil 30 geöffnet und das durch das Ablaufrohr 20, den Kasten 22 und die Ablauföffnung 23 in die Leitung 37 abfliessende Wasser von der Pumpe 7 bei geöffneten Ventilen 9 und 13 und geschlossenen Ventilen 8 und 12 über die Leitung 11 durch den in der Bordwand angebrachten Anschlussstutzen 40 in das Gewässer zurückgepumpt. Das Ablaufrohr 20 wird entsprechend dem sinkenden Klarwasserspiegel abgesenkt, bis die Öffnung des Ablaufrohres 20 die Oberfläche der abgesetzten Schlammschicht erreicht. Dann wird das Ablaufrohr 20 wieder über die maximale Füllhöhe der Hopperwanne 3 hochgezogen, die Ventile 30, 9 und 13 geschlossen und die Ventile 8 und 12 geöffnet und die Platte 38 wieder in die senkrechte Stellung gebracht. Darauf wird der Füllvorgang wiederholt. Nach erneutem Absitzenlassen der Schlammschicht wird die überstehende Klarwasserschicht auf die bereits beschriebene Art und Weise entfernt. Normalerweise ist bereits nach einer dreimaligen Wiederholung der geschilderten Verfahrensschritte die Hopperwanne zu mehr als 70% mit Schlamm gefüllt, dessen Konzentration normalerweise mit der Konzentration des am Boden des Gewässers abgelagerten Schlammes oder Schlicks praktisch identisch ist. Der Saugrüssel 4 des Hoppersaugers wird dann hochgezogen, und der Hopper fährt mit eigener Kraft an die Entladestelle wo der Schlamm entleert wird.

Beispiel

In einem Brackwassergebiet der Weser wurde mit einem entsprechend Fig. 1 umgebauten Hoppersauger Schlick entfernt. Der Inhalt der Hopperwanne betrug 1200 m³. Die im Heckteil der Hopperwanne befindlichen Überlaufluken wurden wasserdicht verschlossen. Die optimale Qualität und Quantität des einzusetzenden Flockungsmittels wurde vorher im Labor mit den bekannten Prüfungen für die Bestimmung der Sedimentationsgeschwindigkeit ermittelt. Für den zu entfernenden Schlick hatte sich ein handelsübliches teilverseiftes Polyacrylamid-Flockungsmittel (Hydropur® der Fa. Cassella AG – Frankfurt/Main-Fechenheim) als geeignet erwiesen, das in einer 0,5gewichtsprozentigen Lösung angewandet und in einer Menge von 19 ppm (bezogen auf 100%iges Flockungsmittel) der hochgepumpten Schlick-Wasser-Suspension zugesetzt wurde. Die Befüllungszone war, wie in Fig. 1 schematisch dargestellt, durch eine ca. 120 cm hohe senkrechte, drehbar gelagerte Beruhigungswand von dem davorliegenden Teil der Hopperwanne getrennt. Das Ablaufrohr 20 im vorderen Teil der Hopperwanne hatte einen Durchmesser von 40 cm. Der erste Befüllvorgang mit ca. 1200 m³ dauerte 20 Minuten. In diesem Augenblick drohten geflockte Feststoffteilchen über die vorderen Überlaufluken mit dem über Bord fliessenden Klarwasser mitgerissen zu werden. 15 Minuten nach Beendigung des Füllvorgangs wurde mit dem Abziehen der inzwischen entstandenen Klarwasserschicht begonnen. Das Abziehen des Klarwassers mit Hilfe des Ablaufrohres und nach der beschriebenen Art dauerte 15 Minuten. Die Hopperwanne enthielt jetzt ca. 460 m³ konzentrierten Schlick mit einer Konzentration von mehr als 40 Gew.-%. Für die erneute Befüllung standen somit 1200 m³ − 460 m³ = ca. 740 m³ Laderaum zur Verfügung. Das Ablaufrohr 20 wurde hochgezogen und die Hopperwanne auf die bereits beschriebene Weise erneut befüllt. Der zweite Füllvorgang wurde nach 12 Minuten abgebrochen; nach weiteren 15 Minuten wurde mit dem Abziehen der sich erneut ausgebildeten Klarwasserschicht nach dem bereits bekannten Verfahren begonnen. Das Abziehen der zweiten Klarwaserschicht dauerte 10 Minuten.

In der Hopperwanne waren jetzt ca. 745 m³ konzentrierter Schlamm vorhanden. Die Hopperwanne wurde jetzt zum dritten Mal befüllt, wobei das Füllen 7½ Minuten dauerte. Nach weiteren 15 Minuten wurde mit dem Abziehen des Klarwassers begonnen. Dies dauerte ca. 6 Minuten. Es waren jetzt ca. 920 m³ konzentrierter Schlamm in der Hopperwanne vorhanden. Die ganze Operation hat insgesamt kanpp 2 Stunden gedauert.

Durch Taucherproben wurde festgestellt, dass die Konzentration der Schlickablagerungen auf der Gewässersohle mit der Konzentration des Schlicks in der Hopperwanne identisch war und ca. 40 Gew.-% Feststoff enthielt. Danach fuhr der Hopper zu der Übergabestelle des Spülfeldes und entlud den Schlick mit Hilfe des üblichen Spülverfahrens.

**Patentansprüche**

1. Verfahren zur Entfernung von Schlamm aus Gewässern, dadurch gekennzeichnet, dass man den Schlamm hochsaugt und die hochgesaugte Schlamm-Wasser-Suspension zusammen mit einem Flockungsmittel in einen schwimmenden Behälter füllt, das Füllen unterbricht, sobald der Behälter voll ist, und nach dem Absitzen des Schlamms die überstehende Wasserschicht entfernt und das Füllen unter Flockungsmittelzusatz, Absitzenlassen, Entfernen der überstehenden Wasserschicht solange wiederholt, bis der Behälter mit Schlamm gefüllt ist.

2. Verfahren nach Anspruch 1, dadurch gekennzeichnet, dass als schwimmender Behälter ein Hoppersauger verwendet wird.

3. Verfahren nach den Ansprüchen 1 oder 2, dadurch gekennzeichnet, dass man das Füllen des Behälters erst dann abbricht, wenn Schlammflocken drohen, über den Behälterrand zu laufen.

4. Verfahren nach den Ansprüchen 1 bis 3, dadurch gekennzeichnet, dass das Flockungsmittel in Strömungsrichtung gesehen hinter der zum Hochsaugen der Schlamm-Wasser-Suspension benutzten Pumpe zugesetzt wird.

5. Verfahren nach den Ansprüchen 1 bis 4, dadurch gekennzeichnet, dass das Flockungsmittel der hochgesaugten Schlamm-Wasser-Suspension in Abhängigkeit von der Schlammkonzentration zudosiert wird.

6. Verfahren gemäss den Ansprüchen 1 bis 5, dadurch gekennzeichnet, dass ein Flockungsmittel auf der Basis eines Polyacrylamids zugefügt wird.

7. Verfahren gemäss den Ansprüchen 1 bis 5, dadurch gekennzeichnet, dass als Flockungsmittel ein nichtionisches Flockungsmittel auf der Basis eines Polyäthylenoxids zugefügt wird.

8. Verfahren gemäss den Ansprüchen 1 bis 5, dadurch gekennzeichnet, dass als Flockungsmittel ein kationisches Flockungsmittel auf der Basis eines Polyäthylenimins zugefügt wird.

9. Verfahren gemäss den Ansprüchen 1 bis 5, dadurch gekennzeichnet, dass als Flockungsmittel ein Polymerisat auf Basis Dimethylaminoäthylmethacrylat und/oder Dimethylaminoäthylacrylat zugefügt wird, das gegebenenfalls mit Acrylamid copolymerisiert ist.

**Claims**

1. Method of removing mud from waters, characterised in that the mud is sucked up and the sucked-up water-mud suspension is filled into a floating vessel together with a flocculating agent, in that filling ist interrupted as soon as the vessel is filled, in that the supernatant water layer ist removed after the mud has settled, and in that filling with addition of flocculating agent, settling and removing the supernatant water layer is repeated until the vessel is filled with mud.

2. Method according to claim 1, characterised in that the floating vessel is a suction hopper.

3. Method according to claim 1 or 2, characterised in that the filling of the vessel is discontinued only when there is a risk that mud flakes will overflow the edge of the vessel.

4. Method according to claims 1 to 3, characterised in that, viewed in the direction of flow, the flocculating agent is added downstream of the pump employed for sucking up the water-mud suspension.

5. Method according to claims 1 to 4, characterised in that the flocculating agent is metered into the sucked-up suspension of mud and water in amounts dependent on the concentration of mud.

6. Method according to claims 1 to 5, characterised in that a flocculating agent based on polyacrylamide is added.

7. Method according to claims 1 to 5, characterised in that the flocculation agent added is a non-ionic flocculating agent based on polyethylene oxide is added.

8. Method according to claims 1 to 5, characterised in that the flocculation agent added is a cationic flocculating agent based on polyethyleneimine.

9. Method according to claims 1 to 5, characterised in that the flocculating agent added is a polymer based on dimethylaminoethyl methacrylate and/or dimethylaminoethyl acrylate, if appropriate, copolymerised with acrylamide.

**Revendications**

1. Procédé pour enlever la boue des cours d'eau, caractérisé en de qu'on aspire la boue, on introduit dans un récipient flottant la suspension ainsi aspirée d'eau et de boue avec un agent de floculation, on arrête ce remplissage dès que le récipient es plein et, après dépôt de la boue on enlève la couche surnageante d'eau et l'on recommence l'introduction de remplissage avec addition de l'agent de floculation, arrêt pour laisser déposer, enlèvement de la couche d'eau surnageante, jusqu'à ce que le récipient soit empli de boue.

2. Procédé selon la revendication 1, caractérisé en ce qu'on utilise comme récipient flottant une drague suceuse auto-porteuse.

3. Procédé selon l'une des revendications 1 ou 2, caractérisé en ce qu'on n'arrête le remplissage du récipient que lorsque les flocons de boue tendent à déborder du récipient.

4. Procédé selon l'une quelconque des revendications 1 à 3, caractérisé en ce qu'on ajoute l'agent de floculation en aval, dans le sens de l'écoulement, de la pompe utilisée pour aspirer la suspension aqueuse de boue.

5. Procédé selon l'une quelconque des revendications 1 à 4, caractérisé en ce qu'on ajoute à la suspension aqueuse de boue aspirée l'agent de floculation en une quantité dosée selon la concentration de la boue.

6. Procédé selon l'une quelconque des revendications 1 à 5, caractérisé en ce qu'on ajoute un agent de floculation à base d'un polyacrylamide.

7. Procédé selon l'une quelconque des revendications de 1 à 5, caractérisé en ce qu'on ajoute comme agent de floculation un agent non ionique de floculation à base d'un poly(oxyde d'éthylène).

8. Procédé selon l'une quelconque des revendications 1 à 5, caractérisé en ce qu'on ajoute comme agent de floculation un agent cationique de floculation à base d'une polyéthylèneimine.

9. Procédé selon l'une quelconque des revendications 1 à 5, caractérisé en ce qu'on ajoute comme agent de floculation un polymère à base de méthacrylate de diméthylaminoéthyle ou d'acrylate de diméthylaminoéthyle ou des deux, qui est éventuellement copolymérisé avec de l'acrylamide.

# FIG. 1

# FIG. 2